# EUROPEAN PATENT SPECIFICATION

(11) **EP 2 372 886 B1**
(45) Date of publication and mention of the grant of the patent: **02.10.2019**
(21) Application number: 09834910.3
(22) Date of filing: 24.12.2009
(51) Int. Cl.: H02K 41/03, H02P 25/06

(54) **LINEAR MOTOR**
LINEARMOTOR
MOTEUR LINÉAIRE

(30) Priority: 25.12.2008 JP 2008331349
(43) Date of publication of application: 05.10.2011
(73) Proprietor: Kabushiki Kaisha Toshiba, Minato-ku Tokyo 105-8001 (JP)
(72) Inventor: MORISHITA, Mimpei, Tokyo 105-8001 (JP); MISU, Daisuke, Tokyo 105-8001 (JP); MIZUNO, Sueyoshi, Tokyo 105-8001 (JP)
(74) Representative: Hoffmann Eitle
(86) International application number: PCT/JP2009/071378
(87) International publication number: WO 2010/074112

(56) References cited:
- CN-A- 101 127 474
- JP-A- 62 092 757
- JP-A- 2000 083 364
- JP-A- 2001 008 430
- JP-A- 2001 008 430
- JP-A- 2001 086 725
- JP-A- 2003 333 823
- JP-A- 2007 082 352

## Description

### Technical Field

The present invention relates to a linear motor which is capable of making a high speed response and obtains a greater thrust with a lighter weight.

### Background Art

Since a motor which employs a Halbach array can link a large number of magnetic fluxes with a coil without using an iron core, studies to put the motor to practical use are making rapid progress.

To substitute a Halbach array for a conventional field magnet which is configured by an iron core and permanent magnets for the purpose of increasing torque is widely employed as a usage of the Halbach array, as disclosed in Patent Document 1 and Patent Document 2. According to Patent Document 3, an inertia moment of a rotary part of a motor wheel is reduced by configuring a wheel-in motor with use of magnets having a smaller density than iron in a side of an outer rotor. In each of these publications, a magnetic path is formed by using an iron core in a side of an armature, and is thus configured to reduce magnetic resistance of a magnetic circuit formed by a field magnet.

Halbach arrays have been employed not only in rotary motors as described above but also in linear motors. Patent Document 4 discloses a linear motor in which field magnets constructed in a Halbach array on yokes are opposed to each other over a gap, to arrange an armature coil wire in a plane in the gap.

When the armature coil wire is thus arranged in a plane, an armature current directed in a traveling direction of the linear motor or a direction opposite to the travelling direction is linked with magnetic fluxes of field magnets, at coil ends. Therefore, no thrust is generated at a part of the armature coil. Besides, an electromagnetic force acts in a direction perpendicular to the travelling direction, so that a high thrust cannot be obtained. A further problem occurs in that lifetime of the armature coil shortens.

On the other side, Patent Document 5 discloses a linear motor using a Halbach array which employs no iron core. However, in this linear motor, field magnets are formed by columnar permanent magnet rows, and an armature coil is arranged so as to be wound about one of the field magnets of the permanent magnet rows which are opposed to each other over a gap. Therefore, a part of the armature coil is not linked with magnetic fluxes generated by the field magnets, and a generated thrust therefore lowers as a problem.

As described above, in conventional motors and linear motors, a weight/torque ratio or weight/thrust ratio is not satisfactorily small. When such an actuator operates, a power which matches an excessive mass is required, and operating costs increase. Consequently, a problem occurs in increase of emission of carbon dioxide. A further problem occurs in controllability of an iron core when an iron core is used.

### Citation List

### Patent Documents

Patent Document 1: Jpn. Pat. Appln. KOKAI Publication No. 2004-350427
Patent Document 2: Jpn. Pat. Appln. KOKAI Publication No. 2006-262603
Patent Document 3: Jpn. Pat. Appln. KOKAI Publication No. 2006-187116
Patent Document 4: Jpn. Pat. Appln. KOKAI Publication No. 2007-19127
Patent Document 5: Jpn. Pat. Appln. KOKAI Publication No. 2007-82352

In addition to that, CN-A-101 127 474 discloses a linear motor according to the preamble of claim 1.

### Disclosure of Invention

### Problems to be Solved by the Invention

Thus, conventional linear motors have a problem that use of an iron core causes a greater weight/thrust ratio and involves greater consumption of electric power. To solve this problem, a coil armature is provided around field magnets. However, magnetic fluxes of the field magnets are not all linked with a coil but the weight/thrust ratio increases consequently.

The present invention has been made based on such situations and has an object of providing a linear motor which lowers a weight/thrust ratio, suppresses power consumption, and reduces operation costs.

### Solution to Problem

A linear motor of the present invention comprises the features of claim 1.

According to the configuration as described above, strong magnetic fluxes can be linked with an armature coil without using an iron core, and the whole armature coil is linked with magnetic fluxes of field magnets.

Advantageous Effects of Invention According to the linear motor of the invention, a strong magnetic field is linked with a whole armature coil, and a weight/thrust ratio can be therefore reduced. Accordingly, power consumption during operation can be suppressed, and operating costs can be reduced.

### Brief Description of Drawings

FIG. 1 is a schematic view of an entire structure of the first embodiment of the invention;
FIG. 2 is a cross-sectional view of the embodiment taken along A-A';
FIG. 3 is a cross-sectional view of the embodiment taken along C-C';
FIG. 4 is a cross-sectional view of the embodiment taken along B-B' ;
FIG. 5 is a block diagram showing a configuration of a driving device in the embodiment;
FIG. 6 is a schematic view of an entire structure of the second embodiment of the invention;
FIG. 7 is a cross-sectional view of the embodiment taken along A-A' ;
FIG. 8 is a cross-sectional view of the embodiment taken along C-C'; and
FIG. 9 is a cross-sectional view of the embodiment taken along B-B'.

### Best Mode for Carrying Out the Invention

Hereinafter, embodiments of the invention will be described in details with reference to the drawings.

### First Embodiment

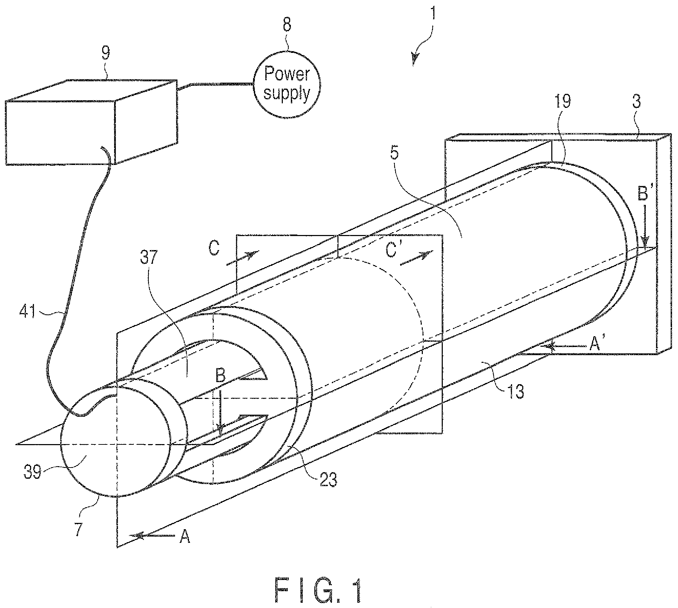

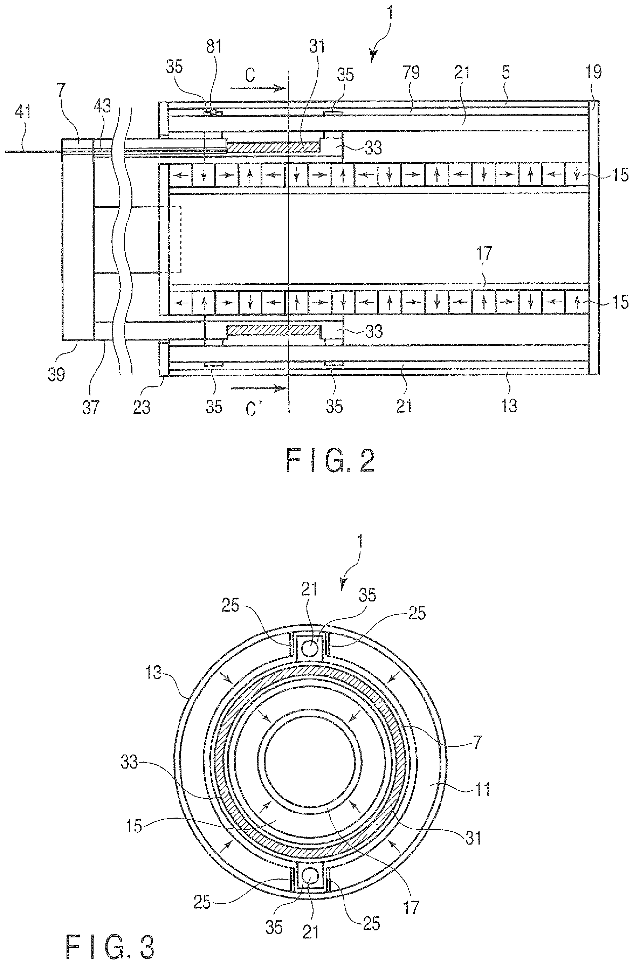

FIGS. 1, 2, 3, and 4 show a configuration of a linear motor according to the first embodiment of the invention. The whole configuration is denoted at 1.

The linear motor 1 comprises: a columnar stator 5 which is attached by an unillustrated predetermined method to a fixing member 3 fixed to a ground side; a cylindrical needle 7 which is positioned in a side opposite to the fixing member 3 and is movable in an axial direction of the stator 5; and a driving device 9 which supplies the needle 7 with an electric power from an external power supply 8.

The stator 5 comprises: an outer permanent magnet row 11 as a first permanent magnet row which is configured by arranging pairs of arcuate permanent magnets to be adjacent to each other in a manner that magnetic poles of each of the pairs of the arcuate permanent magnets are rotated by 90 degrees in a cross-section including center axes of the magnets; an outer pipe 13 as a first annular fixing member, to an inner surface of which the first permanent magnet row is fixed by a predetermined method; an inner permanent magnet row 15 as a second permanent magnet row which has magnetization vectors having radial directional components directed in the same directions as the outer permanent magnet row 11, and having axial directional components directed in the opposite directions to those of the outer permanent magnet row 11; an inner pipe 17 as a second annular fixing member, to which the inner permanent magnet row 15 is fixed by a predetermined method; a fixing disc 19 which fixes the outer pipe 13 and inner pipe 17 in a side of the fixing member 3 by an unillustrated predetermined method; and a fixing plate 23 which is notched so as not to interfere with the needle 7, and fixes, in combination with the fixing disc 19, the outer pipe 13 and inner pipe 17 and two guide rods 21 by an unillustrated predetermined method. To inner upper and lower parts of the outer pipe 13, support plates 25 are fixed by a predetermined method, as positioning members to prevent the outer permanent magnet row 11 from moving in inner circumferential directions. The support plates 25 may be fixed to the outer pipe 13 and to the outer permanent magnet row 11. Further, the first and second permanent magnet rows have substantially equal magnetization energies. Therefore, a very large number of magnetic fluxes directed in radial directions are distributed in a gap between the outer permanent magnet row 11 and the inner permanent magnet row 15.

The needle 7 comprises: a winding ring 33 having a U-shaped cross-section about which a three-phase coil 31 is wound; linear bushes 35 which are attached to upper and lower four corners of the winding ring 33, and guide the winding ring 33 along the guide rods 21; an output ring 37 which is fixed to the winding ring 33 by an unillustrated method and comprises notched parts; and a notch fixing plate 39 which fixes the notched parts of the output ring 37 by an unillustrated method. Further, a lead path 43 for leading a lead line 41 as an electric-power transmission means for leading a three-phase alternating power to the three-phase coil 31 is provided in the output ring 37 and the notch fixing plate 39. Needless to say, the winding ring 33 and the linear bushes 35 function as a coil support means. Since the three-phase coil 31 is positioned in a gap where a very large number of magnetic fluxes in radial directions exist, most of the magnetic fluxes are linked at right angles with the three-phase coil 31. Therefore, a greater thrust is generated by a smaller current.

The lead line 41 is connected to the driving device 9 as a coil excitation means. The driving device 9 comprises a power converter 53 and a source power converter 55 which transfer and receive an electric power through a bus line 51.

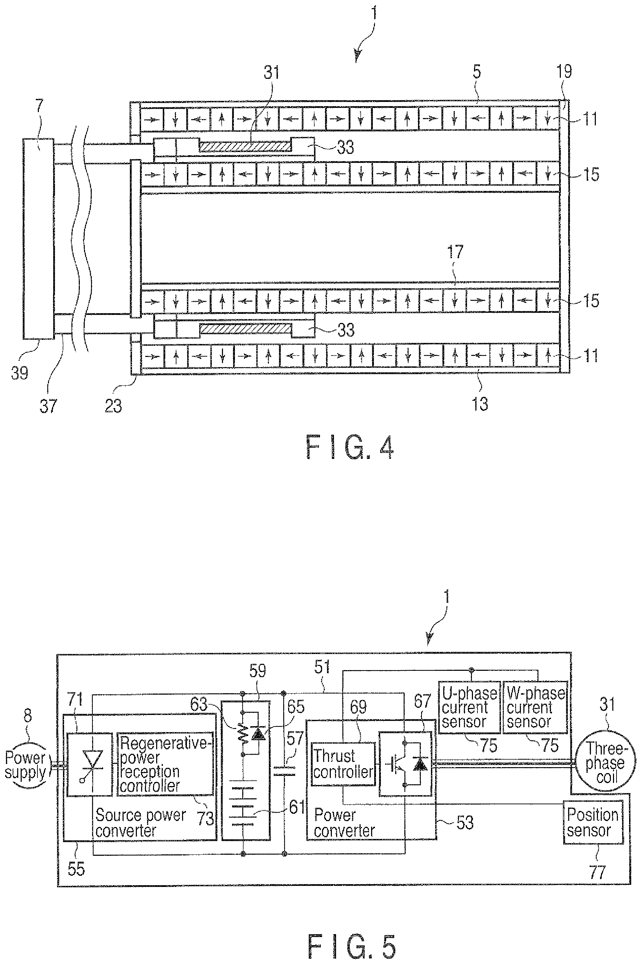

As shown in FIG. 5, a smoothing capacitor 57 as a power storage means and an electric storage device 59 also as a power storage means are connected to the bus line 51. Therefore, voltage fluctuation of the bus line 51 is reduced to be small even when the three-phase coil 31 consumes an electric power and when an electric power is recovered from the three-phase coil 31. The electric storage device 59 comprises a battery 61, a resistor 63, and a diode 65. When an electric power is supplied from the battery 61, the resistor 63 does not consume the electric power. When the battery 61 is electrically charged, the charged power is partially consumed by the resistor 63. In this manner, excessive charging of the battery 61 is restricted. Although one smoothing capacitor 57 and one electric storage device 59 are shown, a plurality of smoothing capacitors 57 as well as electric storage devices 59 may be provided at appropriated positions on the bus line 51.

The power converter 53 comprises a PWM inverter 67 and a thrust controller 69. The thrust controller 69 controls a firing angle for an unillustrated power converter element group in the PWM inverter 67 so that a thrust equal to a thrust instruction value input to the thrust controller 69 from outside of the driving device 9 is generated at the three-phase coil 31.

The supply power converter 55 comprises an inverter 71 and a regenerative-power reception controller 73. Based on an external regenerative-power-reception instruction signal, the regenerative-power reception controller 73 regenerates an electric power stored in the smoothing capacitor 57 and battery 61 to the power supply 8, and controls a firing angle of the inverter 71 to store an electric power from the power supply 8.

The thrust controller 69 comprises: current sensors 75 which detect at least excitation currents at phases U and W among phases U, V, and W of the three-phase coil 31; and a position sensor 77 which detects a relative position of the three-phase coil 31 relative to the outer permanent magnet row 11. Torque control is performed based on signals from these sensors. The position sensor 77 comprises: a scale 79 which is attached to an upper part of an inner surface of the outer pipe 13 of the stator 5; and an optical pickup 81 which detects a gauge of the scale 79. Needless to say, detected position information is introduced into the driving device 9 through an unillustrated position-sensor output line bundled in the lead line 41. The position information from the position sensor 77 is converted into moving distance information of the needle 5 by the thrust controller 69, and is output to outside of the driving device 9. In this manner, an external control device is allowed to perform speed control and positioning control of the needle 5.

Next, a description will be made of operation of the linear motor according to the embodiment configured as described above.

When the device stops, the needle 7 stops without outputting any thrust. If a thrust instruction value is then introduced into the driving device 9 from an external control device, for example, to move the needle 7 to a predetermined position, the current sensors 75 for the phases U and W detect excitation currents of the three-phase coil 31. Further, the position sensor 77 detects a relative position of the three-phase coil 31 in relation to the outer and inner permanent magnet rows 11 and 15. The thrust controller 69 excites the three-phase coil 31 by an excitation current at which a thrust equal to the thrust instruction value is to be generated. Then, the needle 7 starts moving toward the predetermined position by the thrust generated by the three-phase coil 31. The needle 7 continues moving in accordance with predetermined control, such as speed control and positioning control. The needle 7 reaches the predetermined position, and operation of the linear motor 1 then ends. When the operation ends, the external thrust instruction value then becomes zero, which is introduced to the thrust controller 69. The excitation current to the three-phase coil 31 then becomes zero, and the device stops again.

When the device operates, a self inductance of the three-phase coil 31 is small since neither an iron core nor a yoke exists within main magnetic fluxes created by the inner and outer permanent magnet rows 11 and 15 or near the three-phase coil 31. Therefore, even if the needle 7 moves at a high speed, a voltage required for electrically conducting a predetermined excitation current to the three-phase coil 31 is reduced, and a requested voltage for the power supply 8 is reduced. Further, since the needle 7 requires neither an iron core nor a yoke, weight reduction is achieved, and a large part of the three-phase coil 31 is linked with the main magnetic fluxes created by the outer and inner permanent magnet rows 11 and 15. Therefore, the thrust/weight ratio improves. Accordingly, the controllability improves in making the needle 7 respond at a high speed, and contributes to energy saving.

In the first embodiment of the present invention as described above, the permanent magnet rows are configured as stators. However, this configuration does not limit use of the permanent magnet rows as stators. There is no problem if a coil support means is configured to be fixed to the ground side and if permanent magnet rows are configured as needles. When the coil support means is used as a stator, the lead line 41 is not applied with any force, and risks of disconnections and damages are avoidable. Therefore, reliability improves advantageously.

### Second Embodiment

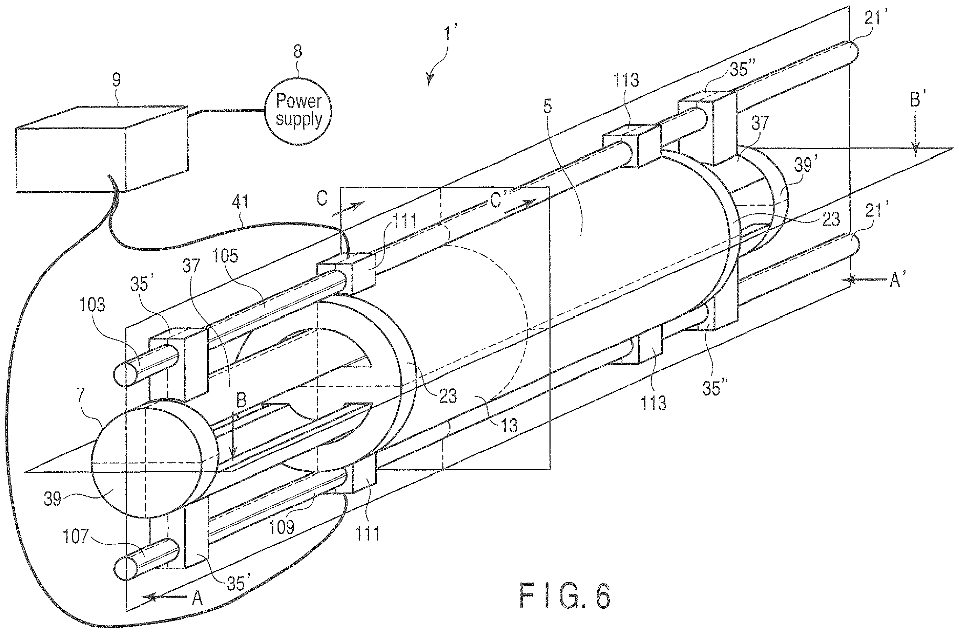

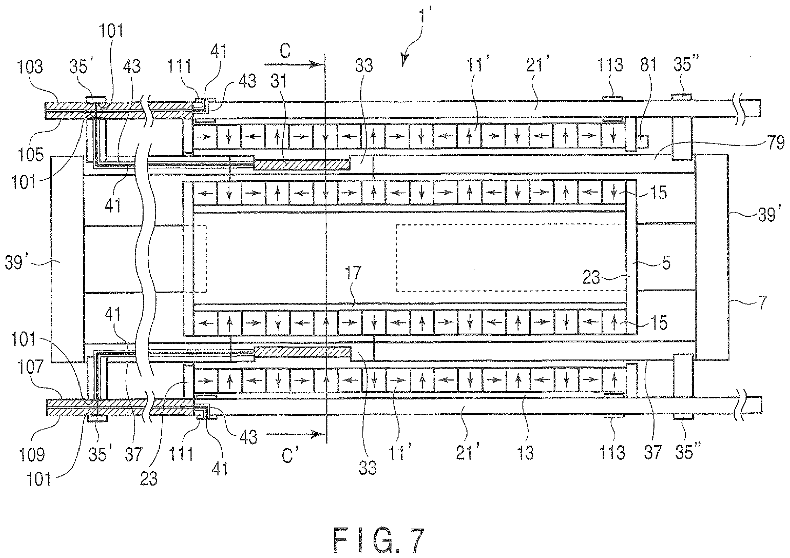

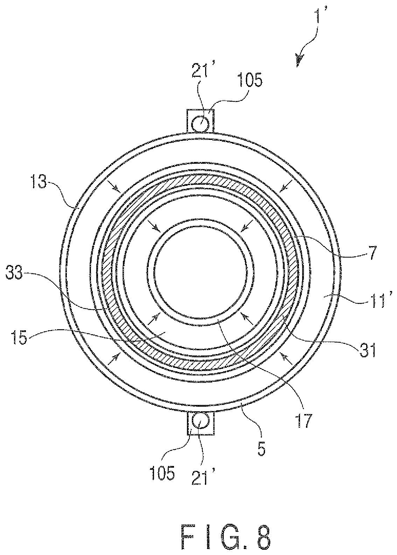

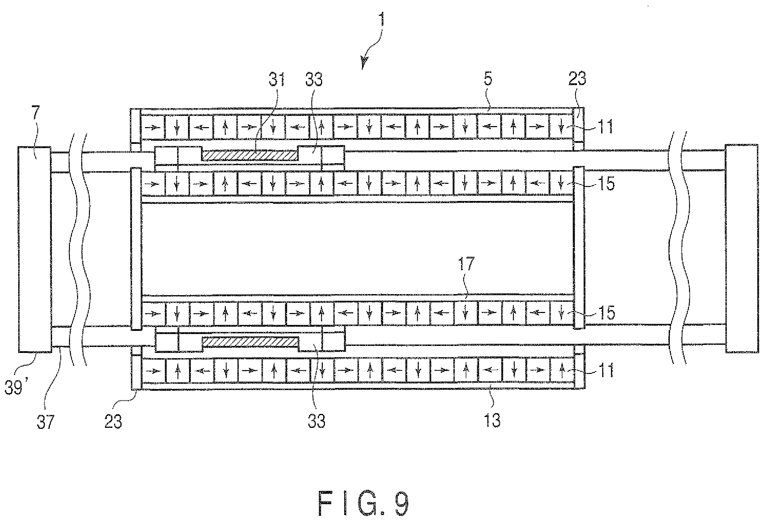

Next, the second embodiment of the invention will be described based on FIGS. 6, 7, 8, and 9. To simplify descriptions, common parts are respectively denoted at common reference signs, and descriptions thereof will be omitted.

In FIGS. 6, 7, 8, and 9, a linear motor according to the present embodiment is denoted, as a whole, at 1'. The linear motor 1' comprises: a stator 5 which is fixed to a ground side by an unillustrated means which uses an outer permanent magnet row 11' and an inner permanent magnet row 15' as stator field magnets; a needle 7 which uses a three-phase coil 31 as an armature; and a driving device 9.

The stator 5 comprises: an outer permanent magnet row 11', as a first permanent magnet row, which is configured by arranging ring permanent magnets to be adjacent to each other in a manner that magnetic poles of the ring permanent magnets are rotated by 90 degrees in a cross-section including center axes of the magnets; an outer pipe 13; an inner permanent magnet row 15; an inner pipe 17; and fixing plates 23 which are notched so as not to interfere with the needle 7 and fix the outer pipe 13 and the inner pipe 17 by an unillustrated predetermined method. Further, the first and second permanent magnet rows have substantially equal magnetization energies. Therefore, a very large number of magnetic fluxes are distributed in a gap between the outer permanent magnet row 11' and the inner permanent magnet row 15.

Further, in the stator 5 according to the present embodiment, guide rods 21' are attached to outer upper and lower parts of the outer pipe 13 through guide-rod support members 111 and 113. To the guide-rod support members 111 from ends of the guide rods 21' in a side of the guide-rod support members 111, electrodes 103, 105, 107, and 109 each divided into two upper and lower halves are fixed to surfaces of the guide rods 21'. Lead lines 41 from the respective electrodes are bundled by a predetermined method, and are introduced into the driving device 9 through lead paths 43 provided in the guide-rod support members 111. An optical pickup 81 for detecting a gauge of a scale 79 which the needle 7 comprises is attached at a predetermined position to one of the fixing plates 23.

The needle 7 comprises: a winding ring 33; an output ring 37 which is fixed to two ends of the winding ring 33 by an unillustrated method and comprises notched parts; a notch fixing plate 39 which fixes the notched parts of the output ring 37 by an unillustrated method; and linear bushes 35' and 35" which are attached to ends of the output ring 37, and guide the winding ring 33 along the guide rods 21'. The linear bushes 35' each comprise a slidable electrode 101 which makes contact with the electrodes 103, 105, 107, and 109 provided on a surface of a guide rod 21'. The lead lines 41 connected at one ends to a three-phase coil 31 are connected to the slidable electrodes 101 through the lead paths 43 provided in the output ring 37 and the linear bushes 35'. In this manner, the three-phase coil 31 is electrically connected to the driving device 9 through the electrodes 103, 105, 107, and 109 in the side of the stator 5. Needless to say, currents having phases U, V, and W corresponding to three-phase alternating-current voltages generated by the driving device 9 and a neutral current are made to flow respectively through the electrodes 103, 105, 107, and 109, and the three-phase coil 31 is excited, to move the needle 7 at a predetermined thrust.

In the present embodiment, the winding ring 33 and linear bushes 35' and 35" function as a coil support means. The lead lines 41, slidable electrodes 101, and electrodes 103, 105, 107, and 109 function as an electric-power transmission means.

In the linear motor 1' configured as described above, magnetic fields generated by the outer permanent magnet row 11' and the inner permanent magnet row 15 are linked with the three-phase coil 31 over the whole circumference thereof. Therefore, an electric power supplied from the driving device 9 can be efficiently converted into a thrust. In addition, when the needle 7 moves, the slidable electrodes 101 move in contact with the electrodes 103, 105, 107, and 109 in the side of the stator. Therefore, even if the needle 7 is rapidly accelerated or decelerated, the lead lines 41 are not damaged. Accordingly, reliability and durability of the motor improve advantageously.

In the foregoing embodiments each, a scale and an optical pickup are used for a position sensor for obtaining position information of a needle in relation to a stator. This use does not limit a means for obtaining position information. For example, a magnetic position sensor or a sensorless method of estimating a position from a counter electromotive force of a three-phase coil 31 may be
Used.

Also in the foregoing embodiments each, either permanent magnet rows or a coil support means is configured as a stator. This configuration does not limit use of either permanent magnet rows or a coil support means as a stator. Both the coil support means and permanent magnet row may be configured to be movable and to move relatively to each other.

Furthermore, the invention can be variously modified without departing from the scope of the invention as defined by the claims. In brief, the invention is not limited just to the foregoing embodiments but can be embodied with constitutive elements modified in a practical phase without departing from the scope of the invention. Further various embodiments may be derived by appropriately combining a plurality of constitutive elements disclosed in the foregoing embodiments. For example, several constitutive elements may be omitted from the whole constitutive elements disclosed in the foregoing embodiments. Such constitutive elements may be appropriately combined between different embodiments.

### Reference Signs List

1, 1"... Linear motor, 3... Fixing member, 5... Stator, 7... Needle, 8... Power supply, 9... Driving device, 11, 11'... Outer permanent magnet row, 13... Outer pipe, 15... Inner permanent magnet row, 17... Inner pipe, 19... Fixing disc, 21, 21'... Guide rod, 23... Fixing plate, 25... Support plate, 31... Three-phase coil, 33... Winding ring, 35, 35', 35"... Linear bush, 37... Output ring, 39, 39'... Notch fixing plate, 41... Lead line, 43... Lead path, 51... Bus line, 53... Power converter, 55... Source power converter 55, 57... Smoothing capacitor, 59... Electric storage device, 61... Battery, 63... Resistor, 65... Diode, 67... PWM inverter, 69... Thrust controller, 71... Inverter, 73... Regenerative-power reception controller, 75... Current sensor, 77... Position sensor, 79... Scale, 81... Optical pickup, 101... Slidable electrode, 103, 105, 107, 109... Electrode

## Claims

1. A linear motor comprising:
a first permanent magnet row (11) configured by arranging pairs of annular or arcuate permanent magnets to be adjacent to each other in a manner that magnetic poles of each of the pairs of the permanent magnets are rotated by at most 90 degrees to each other of the permanent magnets in a cross-section including center axes of the permanent magnets;
a second permanent magnet row (15) of annular or arcuate permanent magnets having magnetization vectors whose radial directional components are directed in the same directions as radial directional components of magnetization vectors of the corresponding radially adjacent magnets of the first permanent magnet row (11), and whose axial directional components are directed in directions opposite to axial directional components of magnetization vectors of the corresponding radially adjacent magnets of the first permanent magnet row (11);
a three-phase coil (31) provided between the first permanent magnet row (11) and the second permanent magnet row (15), and formed of conductors provided outside the second permanent magnet row (15);
a coil support means (33, 35) to which the three-phase coil (31) is fixed, and which move the three-phase coil (31) in parallel with a center axis of the second permanent magnet row (15);
a magnet fixing means (13, 17) which fixes the first permanent magnet row (11) and the second permanent magnet row (15) to be opposed to each other in a manner that the radial directional components of the magnetization vectors of each of the rows are directed in the same directions;
a coil excitation means (9) which excites the three-phase coil (31) and generates a predetermined thrust between the coil support means (33, 35) and the magnet fixing means (13, 17); and
an electric-power transmission means (41) which transmits an electric power output from the coil excitation means (9) to the three-phase coil (31),
**characterized in that**
the first (11) and second permanent magnet rows (15) have substantially equal magnetization energies, and
neither an iron core nor a yoke exists within main magnetic fluxes created by the first and second permanent magnet rows (11, 15) or near the three-phase coil (31).

2. The linear motor of Claim 1, wherein the magnet fixing means (13, 17) comprises a fixing member (3) to which a stator (5) of the linear motor is attached and which is itself fixed to a ground side.

3. The linear motor of Claim 1, wherein the electric-power transmission means (41) comprises a slidable part.

4. The linear motor of Claim 1, wherein the first permanent magnet row (11) comprises a first annular fixing member (13) which fixes the first permanent magnet row (11) from outside.

5. The linear motor of Claim 1, wherein the second permanent magnet row (15) comprises a second annular fixing member (17) which fixes the second permanent magnet row (15) from inside.

6. The linear motor of Claim 4, wherein the first annular fixing member (13) comprises a positioning member (25) which positions the first permanent magnet row (11) inside the first annular fixing member (13).

7. The linear motor of Claim 4, wherein the coil support means (33, 35) is comprised outside the first annular fixing member (13).

## Patentansprüche

1. Linearmotor, umfassend:
eine erste Permanentmagnetreihe (11), die durch Anordnen von Paaren ringförmiger oder bogenförmiger Permanentmagnete, die zueinander benachbart sein sollen, in einer Weise konfiguriert ist, dass Magnetpole jedes der Paare der Permanentmagnete um höchstens 90 Grad der Permanentmagnete in einem Querschnitt einschließlich der Mittelachsen der Permanentmagnete zueinander gedreht sind;
eine zweite Permanentmagnetreihe (15) aus ringförmigen oder bogenförmigen Permanentmagneten mit Magnetisierungsvektoren, deren radiale Richtungskomponenten in die gleichen Richtungen gerichtet sind wie radiale Richtungskomponenten von Magnetisierungsvektoren der entsprechenden radial benachbarten Magnete der ersten Permanentmagnetreihe (11) und deren axiale Richtungskomponenten in Richtungen entgegengesetzt zu den axialen Richtungskomponenten der Magnetisierungsvektoren der entsprechenden radial benachbarten Magnete der ersten Permanentmagnetreihe (11) gerichtet sind;
eine Dreiphasenspule (31), die zwischen der ersten Permanentmagnetreihe (11) und der zweiten Permanentmagnetreihe (15) bereitgestellt ist und aus Leitern gebildet ist, die außerhalb der zweiten Permanentmagnetreihe (15) bereitgestellt sind;
ein Spulenträgermittel (33, 35), an dem die Dreiphasenspule (31) befestigt ist und welches die Dreiphasenspule (31) parallel zu einer Mittelachse der zweiten Permanentmagnetreihe (15) bewegt;
ein Magnetbefestigungsmittel (13, 17), welches die erste Permanentmagnetreihe (11) und die zweite Permanentmagnetreihe (15) derart befestigt, dass sie einander in einer Weise gegenüberliegen, dass die radialen Richtungskomponenten der Magnetisierungsvektoren jeder der Reihen in die gleichen Richtungen gerichtet sind;
ein Spulenerregungsmittel (9), welches die Dreiphasenspule (31) erregt und einen vorbestimmten Schub zwischen dem Spulenträgermittel (33, 35) und dem Magnetbefestigungsmittel (13, 17) erzeugt; und
ein Stromübertragungsmittel (41), das einen Stromausgang von dem Spulenerregungsmittel (9) an die Dreiphasenspule (31) überträgt,
**dadurch gekennzeichnet, dass**
die erste (11) und die zweite Permanentmagnetreihe (15) im Wesentlichen gleiche Magnetisierungsenergien aufweisen, und
weder ein Eisenkern noch ein Joch in den Hauptmagnetflüssen vorhanden ist, die durch die erste und zweite Permanentmagnetreihe (11, 15) oder in der Nähe der Dreiphasenspule (31) erzeugt werden.

2. Linearmotor nach Anspruch 1, wobei das Magnetbefestigungsmittel (13, 17) ein Befestigungselement (3) umfasst, an dem ein Stator (5) des Linearmotors angebracht ist und das selbst an einer Erdungsseite befestigt ist.

3. Linearmotor nach Anspruch 1, wobei das Stromübertragungsmittel (41) einen verschiebbaren Teil umfasst.

4. Linearmotor nach Anspruch 1, wobei die erste Permanentmagnetreihe (11) ein erstes ringförmiges Befestigungselement (13) umfasst, das die erste Permanentmagnetreihe (11) von außen her befestigt.

5. Linearmotor nach Anspruch 1, wobei die zweite Permanentmagnetreihe (15) ein zweites ringförmiges Befestigungselement (17) umfasst, das die zweite Permanentmagnetreihe (15) von innen her befestigt.

6. Linearmotor nach Anspruch 4, wobei das erste ringförmige Befestigungselement (13) ein Positionierungselement (25) umfasst, das die erste Permanentmagnetreihe (11) innerhalb des ersten ringförmigen Befestigungselements (13) positioniert.

7. Linearmotor nach Anspruch 4, wobei das Spulenträgermittel (33, 35) außerhalb des ersten ringförmigen Befestigungselements (13) umfasst ist.

## Revendications

1. Moteur linéaire comprenant:
une première rangée d'aimants permanents (11) configurée en agençant des paires d'aimants permanents annulaires ou arqués pour être adjacentes les unes aux autres de telle manière que les pôles magnétiques de chacune des paires d'aimants permanents sont tournés d'au plus 90 degrés les uns par rapport aux autres des aimants permanents dans une section transversale incluant des axes centraux des aimants permanents ;
une seconde rangée d'aimants permanents (15) constituée d'aimants permanents annulaires ou arqués ayant des vecteurs de magnétisation dont des composantes directionnelles radiales sont dirigées dans les mêmes directions que des composantes directionnelles radiales de vecteurs de magnétisation des aimants correspondants radialement adjacents de la première rangée d'aimants permanents (11), et dont des composantes directionnelles axiales sont dirigées dans des directions opposées à des composantes directionnelles axiales de vecteurs de magnétisation des aimants correspondants radialement adjacents de la première rangée d'aimants permanents (11) ;
une bobine triphasée (31) prévue entre la première rangée d'aimants permanents (11) et la seconde rangée d'aimants permanents (15), et formée de conducteurs prévus à l'extérieur de la seconde rangée d'aimants permanents (15) ;
un moyen de support de bobine (33, 35) auquel la bobine triphasée (31) est fixée, et qui déplace la bobine triphasée (31) en parallèle avec un axe central de la seconde rangée d'aimants permanents (15) ;
un moyen de fixation d'aimant (13, 17) qui fixe la première rangée d'aimants permanents (11) et la seconde rangée d'aimants permanents (15) pour qu'elles soient opposées l'une à l'autre de telle manière que les composantes directionnelles radiales des vecteurs de magnétisation de chacune des rangées sont dirigées dans les mêmes directions ;
un moyen d'excitation de bobine (9) qui excite la bobine triphasée (31) et génère une poussée prédéterminée entre le moyen de support de bobine (33, 35) et le moyen de fixation d'aimant (13, 17) ; et
un moyen de transmission d'énergie électrique (41) qui transmet une énergie électrique délivrée en sortie par le moyen d'excitation de bobine (9) à la bobine triphasée (31),
**caractérisé en ce que**
les première (11) et seconde rangées d'aimants permanents (15) ont des énergies de magnétisation sensiblement égales, et
ni un noyau de fer ni une culasse n'existe dans des flux magnétiques principaux créés par les première et seconde rangées d'aimants permanents (11, 15) ou près de la bobine triphasée (31).

2. Moteur linéaire selon la revendication 1, dans lequel le moyen de fixation d'aimant (13,17) comprend un élément de fixation (3) auquel est attaché un stator (5) du moteur linéaire et qui est lui-même fixé sur un côté de masse.

3. Moteur linéaire selon la revendication 1, dans lequel le moyen de transmission d'énergie électrique (41) comprend une partie coulissante.

4. Moteur linéaire selon la revendication 1, dans lequel la première rangée d'aimants permanents (11) comprend un premier élément de fixation annulaire (13) qui fixe la première rangée d'aimants permanents (11) depuis l'extérieur.

5. Moteur linéaire selon la revendication 1, dans lequel la seconde rangée d'aimants permanents (15) comprend un second élément de fixation annulaire (17) qui fixe la seconde rangée d'aimants permanents (15) depuis l'intérieur.

6. Moteur linéaire selon la revendication 4, dans lequel le premier élément de fixation annulaire (13) comprend un élément de positionnement (25) qui positionne la première rangée d'aimants permanents (11) à l'intérieur du premier élément de fixation annulaire (13).

7. Moteur linéaire selon la revendication 4, dans lequel le moyen de support de bobine (33, 35) est constitué à l'extérieur du premier élément de fixation annulaire (13).
